# EUROPÄISCHE PATENTSCHRIFT

(11) **EP 1 029 452 B1**
(45) Veröffentlichungstag und Bekanntmachung des Hinweises auf die Patenterteilung: **05.03.2003**
(21) Anmeldenummer: 99124174.6
(22) Anmeldetag: 03.12.1999
(51) Int. Cl.: A01M 7/00

(54) **Gezogene Landwirtschaftliche Feldspritze**
Drawn agricultural field sprayer
Pulvérisateur agricole tracté

(30) Priorität: 19.02.1999 DE 19906923
(43) Veröffentlichungstag der Anmeldung: 23.08.2000
(73) Patentinhaber: Amazonen-Werke H. Dreyer GmbH & Co. KG, 49205 Hasbergen (DE)
(72) Erfinder: Ehlen, Volker, Dipl.-Ing., 29485 Lemgow (DE)

(56) Entgegenhaltungen:
- EP-A- 0 766 917
- FR-A- 1 420 533
- FR-A- 2 572 253

## Beschreibung

Die Erfindung betrifft eine gezogene landwirtschaftliche Feldspritze gemäß des Oberbegriffes des Patentanspruches 1.

Eine derartige Feldspritze ist bekannt. Bei diesen Feldspritzen sind die Flüssigkeitsbehälter vor dem Vorratsbehälter und seitlich der Zugdeichsel angeordnet. Bei anderen Feldspritzen ist der Flüssigkeitsbehälter in dem Flüssigkeitstank in integrierter Weise angeordnet.

Bei der ersten Lösung ist, insbesondere bei geleertem Vorratstank und gefülltem Flüssigkeitsbehälter, nachteilig, daß sich durch den einseitig seitlich des Rahmens angeordneten Flüssigkeitsbehälter eine unsymmetrische Gewichtsverteilung ergibt. Dieses bedeutet, insbesondere bei Kurvenfahrt auf der Straße eine erhöhte Kippgefahr.

Bei der Lösung, bei dem der Flüssigkeitsbehälter in integrierter Weise im Flüssigkeitstank angeordnet ist, ergibt sich ein reduziertes Fassungsvermögen des Vorratstanks.

Der Erfindung liegt die Aufgabe zugrunde, eine vorteilhafte Anordnung für Flüssigkeitsbehälter einer gezogenen landwirtschaftlichen Feldspritze vorzuschlagen.

Diese Aufgabe wird erfindungsgemäß dadurch gelöst, daß zwei Flüssigkeitsbehälter vorgesehen sind, die in dem Bereich oberhalb der Laufräder seitlich des Vorratstanks angeordnet sind. Durch die Anordnung der Flüssigkeitsbehälter in dem Bereich oberhalb der Laufräder seitlich des Vorratstanks befinden sich die Flüssigkeitsbehälter einerseits in einem geschützten Bereich, und andererseits in einem bisher nicht genutzten Bereich. Darüber hinaus erhöhen die oberhalb der Laufräder angeordneten Flüssigkeitsbehälter, auch wenn sie gefüllt sind, nicht die Kippgefahr sondern erhöhen vielmehr die Standsicherheit der Feldspritze, da sie sich direkt oberhalb der Laufräder befinden.

Die Flüssigkeitsbehälter lassen sich an dem Vorratstank im seitlichen Bereich in integrierter Weise anordnen, indem der Vorratsbehälter entsprechend ausgebildet wird.

In einer anderen Ausführung ist es möglich, die Flüssigkeitsbehälter an dem Rahmen und/oder an dem Vorratstank mittels geeigneter Befestigungsmittel zu befestigen.

Eine kostengünstige Herstellung der Flüssigkeitsbehälter ergibt sich dadurch, daß die Flüssigkeitsbehälter gleichartig ausgebildet sind.

Die Flüssigkeitsbehälter können gleichzeitig die Funktion der Kotflügel übernehmen, wenn sie an die Unterseiten der Flüssigkeitsbehälter an die Form der Kotflügel angepaßt oder einer Kotflügelform entsprechend ausgebildet sind. Auch ist es möglich, die Flüssigkeitsbehälter aufgrund ihrer Formausbildung auf die Kotflügel aufzusetzen.

Eine preiswerte Ausgestaltung ergibt sich dadurch, daß die Unterseiten der Flüssigkeitsbehälter zumindest teilweise als Kotflügel ausgebildet sind. Hierbei dienen die Unterseiten der Flüssigkeitsbehälter zumindest teilweise als Kotflügel. In vorteilhafter Weise können sich an die jeweilige Unterseite der Flüssigkeitsbehälter als Verlängerungselemente ausgebildete Kotflügelverlängerungen zur Schaffung eines geschlossenen Kotflügels anschließen.

Um eine gute Gewichtsverteilung bei zwei Flüssigkeitsbehältern zu erreichen, ist vorgesehen, daß die Flüssigkeitsbehälter mittels einer Flüssigkeitsleitung untereinander verbunden sind. Um ein unerwünschtes hin- und herschwappen der Flüssigkeit aus dem einen in den anderen Behälter zu vermeiden, ist vorgesehen, daß in der die Flüssigkeitsbehälter miteinander verbindenden Leitungen ein geeignetes Rückschlagventil und/oder ein Absperrelement angeordnet ist.

Weitere Einzelheiten der Erfindung sind der Beispielsbeschreibung und den Zeichnungen zu entnehmen. Hierbei zeigen
- Fig.1: eine Feldspritze in Seitenansicht und in Prinzipdarstellung und
- Fig.2: die Feldspritze in Draufsicht und in Prinzipdarstellung.

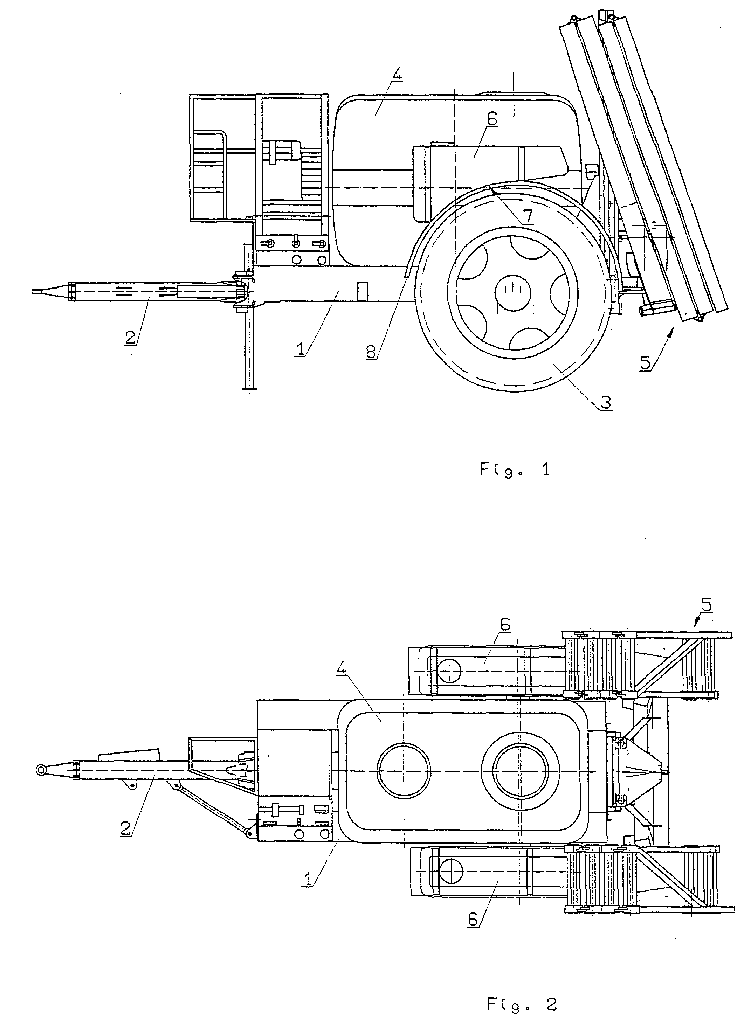

Die landwirtschaftliche Feldspritze weist den Rahmen 1 mit der Zugdeichsel 2 und das die Laufräder 3 aufweisende Fahrwerk auf. Auf dem Rahmen 1 ist der Vorratstank 4 zum Mitführen der Spritzflüssigkeit angeordnet. An dem Vorratstank 4 sind in bekannter und daher nicht näher dargestellter Weise eine Pumpe, Druckarmaturen und Einstellarmaturen zur Einstellung und Förderung der auszubringenden Flüssigkeitsmenge zu den in dem Verteilergestänge 5 angeordneten Ausbringeinrichtung zugeordnet. Desweiteren weist die Feldspritze zwei Flüssigkeitsbehälter 6 zur Mitführung von Frischwasser oder anderen Flüssigkeiten auf. Auf jeder Seite des Vorratstanks 4 ist jeweils ein Flüssigkeitsbehälter 6 vorgesehen. Diese Flüssigkeitsbehälter 6 sind jeweils im Bereich oberhalb der Laufräder 3 seitlich des Vorratstanks 4 angeordnet. Diese beiden Flüssigkeitsbehälter 6 können in dem seitlichen Bereich des Vorratstanks 4 integriert angeordnet sein oder an dem Rahmen 1 oder dem Vorratstank 4 mittels geeigneter Befestigungsmittel befestigt sein. Die auf jeder Seite angeordneten Flüssigkeitsbehälter 6 sind gleichartig ausgebildet. Die Unterseiten 7 der Flüssigkeitsbehälter 6 weisen, wie ein Blick auf die Fig.1 zeigt, an ihren Unterseiten 7 eine Kontur auf, die an die Form der Kotflügel 8 angepaßt ist. Die Flüssigkeitsbehälter 6 sind auf die Kotflügel 8 aufgesetzt. Es ist jedoch auch möglich, daß lediglich an der Vorder- und der Rückseite der Flüssigkeitsbehälter 6 an deren Unterseite 7 als Verlängerungselemente ausgebildete Kotflügelelemente zur Schaffung eines geschlossenen Kotflügels 8 sich anschließen. In diesem Falle würden die Unterseiten 7 der Flüssigkeitsbehälter 6 zumindest teilweise als Kotflügel dienen.

Die Flüssigkeitsbehälter 6 sind mittels einer nicht dargestellten Flüssigkeitsleitung untereinander verbunden. Hierbei ist in dieser die Flüssigkeitsbehälter 6 miteinander verbindenen Leitungen ein geeignetes Rückschlag- oder Absperrventil angeordnet, mittels welchem ein unkontrollierter Flüssigkeitstaustausch zwischen den beiden Flüssigkeitsbehältern 6 unterbunden werden kann.

## Patentansprüche

1. Gezogene landwirtschaftliche Feldspritze mit einem Rahmen, einem Laufräder aufweisenden Fahrwerk, einer Zugdeichsel, einem Vorratstank und zumindest einem Flüssigkeitsbehälter, **dadurch gekennzeichnet, daß** zwei Flüssigkeitsbehälter (6) vorgesehen sind, die in dem Bereich oberhalb der Laufräder (3) seitlich des Vorratstanks (4) angeordnet sind.

2. Feldspritze nach Anspruch 1, **dadurch gekennzeichnet, daß** die Flüssigkeitsbehälter (6) in dem Vorratstank (4) integriert angeordnet sind.

3. Feldspritze nach Anspruch 1, **dadurch gekennzeichnet, daß** die Flüssigkeitsbehälter (6) an dem Rahmen (1) und/oder dem Vorratstank (4) mittels geeigneter Befestigungsmittel befestigt sind.

4. Feldspritze nach einem oder mehreren der vorstehenden Ansprüche, **dadurch gekennzeichnet, daß** die Flüssigkeitsbehälter (6) gleich ausgebildet sind.

5. Feldspritze nach einem oder mehreren der vorstehenden Ansprüche, **dadurch gekennzeichnet, daß** die Unterseiten (7) der Flüssigkeitsbehälter (6) an die Form der Kotflügel (8) angepaßt ausgebildet sind.

6. Feldspritze nach einem oder mehreren der vorstehenden Ansprüche, **dadurch gekennzeichnet, daß** die Unterseiten (7) der Flüssigkeitsbehälter (6) zumindest teilweise als Kotflügel (8) ausgebildet sind.

7. Feldspritze nach einem oder mehreren der vorstehenden Ansprüche, **dadurch gekennzeichnet, daß** die Unterseiten der Flüssigkeitsbehälter (6) zumindest teilweise als Kotflügel (8) dienen.

8. Feldspritze nach Anspruch 6 oder 7, **dadurch gekennzeichnet, daß** sich an die jeweilige Unterseite (7) der Flüssigkeitsbehälter (6) als Verlängerungskotflügelelemente Verlängerungen zur Schaffung eines geschlossenen Kotflügels (8) anschließen.

9. Feldspritze nach einem oder mehreren der vorstehenden Ansprüche, **dadurch gekennzeichnet, daß** die Flüssigkeitsbehälter (6) mittels einer Flüssigkeitsleitung untereinander verbunden sind.

10. Feldspritze nach Anspruch 9, **dadurch gekennzeichnet, daß** in der die Flüssigkeitsbehälter (6) miteinander verbindenden Leitung ein geeignetes Rückschlagventil und/oder ein Absperrelement angeordnet ist.

## Claims

1. Towed agricultural field sprayer having a frame, a framework having running wheels, a towing shaft, a storage tank and at least one liquid container, **characterised in that** two liquid containers (6) are provided, which are disposed laterally of the storage tank (4) in the region above the running wheels (3).

2. Field sprayer according to claim 1, **characterised in that** the liquid containers (6) are disposed in an integrated manner in the storage tank (4).

3. Field sprayer according to claim 1, **characterised in that** the liquid containers (6) are mounted on the frame (1) and/or on the storage tank (4) by means of suitable fixing means.

4. Field sprayer according to one or more of the preceding claims, **characterised in that** the liquid containers (6) are configured in an identical manner.

5. Field sprayer according to one or more of the preceding claims, **characterised in that** the bottom surfaces (7) of the liquid containers (6) are configured so as to be adapted to the shape of the mudguards (8).

6. Field sprayer according to one or more of the preceding claims, **characterised in that** the bottom surfaces (7) of the liquid containers (6) are configured at least partially as mudguards (8).

7. Field sprayer according to one or more of the preceding claims, **characterised in that** the bottom surfaces of the liquid containers (6) act at least partially as mudguards (8).

8. Field sprayer according to claim 6 or 7, **characterised in that** extension portions as mudguard extension members connect to the respective bottom surface (7) of the liquid containers (6) to create a dosed mudguard (8).

9. Field sprayer according to one or more of the preceding claims, **characterised in that** the liquid containers (6) are interconnected by means of a liquid pipe.

10. Field sprayer according to claim 9, **characterised in that** a suitable non-return valve and/or a shut-off member is disposed in the pipe which interconnects the liquid containers (6).

## Revendications

1. Pulvérisateur agricole tracté comportant un châssis, un dispositif de roulement équipé de roues de roulement, un timon et un réservoir d'alimentation ainsi qu'au moins un réservoir à liquide,
**caractérisé par**
deux réservoirs à liquide (6) installés au-dessus des roues de roulement (3) à côté du réservoir d'alimentation (4).

2. Pulvérisateur agricole selon la revendication 1,
**caractérisé en ce que**
les réservoirs à liquide (6) sont intégrés dans le réservoir d'alimentation (4).

3. Pulvérisateur agricole selon la revendication 1,
**caractérisé en ce que**
les réservoirs à liquide (6) sont fixés au châssis (1) et/ou au réservoir (4) à l'aide de moyens de fixation appropriés.

4. Pulvérisateur agricole selon l'une ou plusieurs des revendications précédentes,
**caractérisé en ce que**
les réservoirs à liquide (6) sont réalisés de façon identique.

5. Pulvérisateur agricole selon l'une ou plusieurs des revendications précédentes,
**caractérisé en ce que**
la face inférieure (7) des réservoirs à liquide (6) est adaptée à la forme des garde-boue (8).

6. Pulvérisateur agricole selon l'une quelconque des revendications précédentes,
**caractérisé en ce que**
la face inférieure (7) des réservoirs à liquide (6) constitue au moins en partie le garde-boue (8).

7. Pulvérisateur agricole selon l'une quelconque des revendications précédentes,
**caractérisé en ce que**
la face inférieure (7) des réservoirs à liquide (6) sert au moins en partie de garde-boue (8).

8. Pulvérisateur agricole selon l'une des revendications 6 ou 7,
**caractérisé en ce que**
la face inférieure (7) des réservoirs à liquide (6) comporte des éléments de garde-boue formant des prolongements pour créer un garde-boue fermé (8).

9. Pulvérisateur agricole selon l'une ou plusieurs des revendications précédentes,
**caractérisé en ce que**
les réservoirs à liquide (6) sont reliés par une conduite de liquide.

10. Pulvérisateur agricole selon la revendication 9,
**caractérisé en ce que**
la conduite reliant les réservoirs (6) comporte un clapet anti-retour approprié et/ou un élément de coupure.
